(19) Europäisches Patentamt / European Patent Office / Office européen des brevets

(11) **EP 3 302 768 B1**

(12) **FASCICULE DE BREVET EUROPEEN**

(45) Date de publication et mention
de la délivrance du brevet:
**30.03.2022 Bulletin 2022/13**

(21) Numéro de dépôt: **16733633.8**

(22) Date de dépôt: **25.05.2016**

(51) Classification Internationale des Brevets (IPC):
**B01D 63/06** $^{(2006.01)}$   **B01D 46/24** $^{(2006.01)}$
**B01D 67/00** $^{(2006.01)}$   **B28B 1/00** $^{(2006.01)}$
**C04B 38/00** $^{(2006.01)}$

(52) Classification Coopérative des Brevets (CPC):
(C-Sets disponibles)
**B01D 46/2455; B01D 46/2418; B01D 46/2474;**
**B01D 63/061; B01D 63/066; B01D 67/0041;**
**B01D 67/0067; C04B 38/0003;** C04B 2111/00801
(Cont.)

(86) Numéro de dépôt international:
**PCT/FR2016/051233**

(87) Numéro de publication internationale:
**WO 2016/193573 (08.12.2016 Gazette 2016/49)**

(54) **ÉLÉMENT DE SÉPARATION AVEC UN RÉSEAU TRIDIMENSIONNEL DE CIRCULATION POUR LE MILIEU FLUIDE A TRAITER**

TRENNELEMENT MIT EINER DREIDIMENSIONALEN ZIRKULATIONSMATRIX FÜR DAS ZU BEHANDELNDE FLÜSSIGMEDIUM

SEPARATION ELEMENT WITH A THREE-DIMENSIONAL CIRCULATION MATRIX FOR THE FLUID MEDIUM TO BE TREATED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.05.2015 FR 1554908**

(43) Date de publication de la demande:
**11.04.2018 Bulletin 2018/15**

(73) Titulaire: **Technologies Avancees et Membranes Industrielles**
**26110 Nyons (FR)**

(72) Inventeurs:
• **LESCOCHE, Philippe**
**26110 Piegon (FR)**
• **ANQUETIL, Jérôme**
**84110 Vaison la Romaine (FR)**

(74) Mandataire: **Cabinet Beau de Loménie**
**158, rue de l'Université**
**75340 Paris Cedex 07 (FR)**

(56) Documents cités:
**EP-A1- 0 778 073       EP-A1- 2 832 708**
**WO-A1-96/28241       FR-A1- 3 006 606**
**GB-A- 2 223 690**

(52) Classification Coopérative des Brevets (CPC):
(Cont.)

C-Sets
**C04B 38/0003, C04B 35/10, C04B 35/46,**
**C04B 35/48;**
**C04B 38/0003, C04B 35/565, C04B 35/58014,**
**C04B 35/581, C04B 35/583**

**Description**

La présente invention concerne le domaine technique des éléments de séparation d'un milieu fluide à traiter en un filtrat et un rétentat, communément appelés membranes de filtration.

Plus précisément, l'invention concerne de nouvelles géométries de support poreux permettant d'augmenter l'aire de la surface filtrante de ces éléments de séparation.

Les procédés de séparation utilisant des membranes sont utilisés dans de nombreux secteurs, notamment dans l'environnement pour la production d'eau potable et le traitement des effluents industriels, dans l'industrie chimique, pétrochimique, pharmaceutique, agro-alimentaire et dans le domaine de la biotechnologie.

Une membrane constitue une barrière sélective et permet, sous l'action d'une force de transfert, le passage ou l'arrêt de certains composants du milieu à traiter. Le passage ou l'arrêt des composants résulte de leur taille par rapport à la taille des pores de la membrane qui se comporte alors comme un filtre. En fonction de la taille des pores, ces techniques sont nommées microfiltration, ultrafiltration ou nanofiltration.

Il existe des membranes de structures et textures différentes. Les membranes sont, en général, constituées d'un support poreux qui assure la résistance mécanique de la membrane et donne également la forme et donc détermine la surface filtrante de la membrane. Sur ce support, une ou plusieurs couches de quelques microns d'épaisseur assurant la séparation et dites couches séparatrices, couches de filtration, couches de séparation, ou couches actives, sont déposées. Durant la séparation, le transfert du fluide filtré s'effectue à travers la couche séparatrice, puis ce fluide se répand dans la texture poreuse du support pour se diriger vers la surface extérieure du support poreux. Cette partie du fluide à traiter ayant traversé la couche de séparation et le support poreux est appelée perméat ou filtrat et se trouve récupérée par une chambre de collecte entourant la membrane. L'autre partie est appelée rétentat et est, le plus souvent, réinjectée dans le fluide à traiter en amont de la membrane, grâce à une boucle de circulation.

De manière classique, le support est d'abord fabriqué selon la forme souhaitée par extrusion, puis fritté à une température et pendant un temps suffisant pour assurer la solidité requise, tout en conservant dans la céramique obtenue la texture poreuse ouverte et interconnectée voulue. Ce procédé contraint à l'obtention d'un ou plusieurs canaux rectilignes à l'intérieur desquels sont ensuite déposées et frittées la ou les couches séparatrices. Les supports sont traditionnellement de forme tubulaire et comportent un ou plusieurs canaux rectilignes aménagés parallèlement à l'axe central du support. Dans le brevet EP 0 778 073, la surface interne des canaux est lisse et ne présente aucune irrégularité alors que dans le brevet GB 2 223 690, le profil des canaux est en étoile. Dans la demande de brevet WO 96/28241, le canal présente une forme hélicoïdale.

Le volume intérieur du support étant défini et limité de par ses dimensions extérieures et l'aire de la surface filtrante étant proportionnelle au nombre de canaux, il a été constaté que l'aire des surfaces filtrantes des membranes de filtration fabriquées à partir de supports ayant de telles géométries se heurtent à un plafond et présentent, de ce fait, des performances limitées en termes de débit.

Le principe de toute séparation tangentielle mettant en œuvre des éléments de filtration réside dans un transfert sélectif dont l'efficacité est dépendante de la sélectivité de la membrane (la couche active) et de la perméabilité (flux) de l'élément de filtration considéré dans son entier (support + couche active).

La performance d'un élément de filtration est, outre l'efficacité du transfert sélectif précédemment décrit, directement proportionnelle à l'aire de la surface filtrante mise en jeu.

Le rapport S/V dans lequel S est l'aire de la surface d'échange de la membrane et V est le volume de l'élément de séparation permet de caractériser la compacité d'une membrane :

$$Compacité = \frac{S}{V} = \frac{Aire\ de\ la\ surface\ filtrante}{Volume\ de\ l'élément\ de\ filtration}$$

Sont historiquement et chronologiquement apparues sur le marché des éléments de séparation tubulaires cylindriques monocanal, puis des éléments de séparation tubulaires multicanaux.

Les premiers éléments de séparation multicanaux, dont l'un des intérêts, outre l'augmentation de l'aire totale de la surface filtrante, réside dans l'obtention de canaux de petits diamètres hydraulique sans risques de fragilité pour l'élément de séparation, comportaient exclusivement des canaux de sections droites circulaires.

La génération suivante abandonna les canaux circulaires afin de mieux occuper le volume interne du tube, augmenter la compacité et accroître les possibilités de turbulences.

C'est ainsi par exemple qu'une membrane ayant un diamètre extérieur de 25 mm et une longueur de 1 178 mm développe une surface filtrante de 0,155 m$^2$ quand elle possède sept canaux circulaires ayant un diamètre hydraulique de 6 mm et une surface filtrante de 0,195 m$^2$ quand elle possède huit canaux non circulaires ayant également un diamètre hydraulique de 6 mm.

Les calculs des compacités pour ces deux membranes donnent les résultats suivants :

$$Compacité_1 = \frac{S_1}{V} = \frac{0,155}{\pi.\left(1,25.10^{-2}\right)^2.1,178} = \frac{0,155}{0,00057825} \cong 268\ ^{m^2}\!/\!_{m^3}$$

$$Compacité_2 = \frac{S_2}{V} = \frac{0,195}{\pi.\left(1,25.10^{-2}\right)^2.1,178} = \frac{0,195}{0,00057825} \cong 337\ ^{m^2}\!/\!_{m^3}$$

$Compacité_2 \cong 1,25 \times Compacité_1$

Il est constaté grâce à ces deux exemples que, à diamètre hydraulique égal et pour des éléments de séparation identiques en formes et en dimensions extérieures, le passage de canaux à section circulaire à des canaux à section non circulaire permet d'augmenter de 25% la valeur de la compacité.

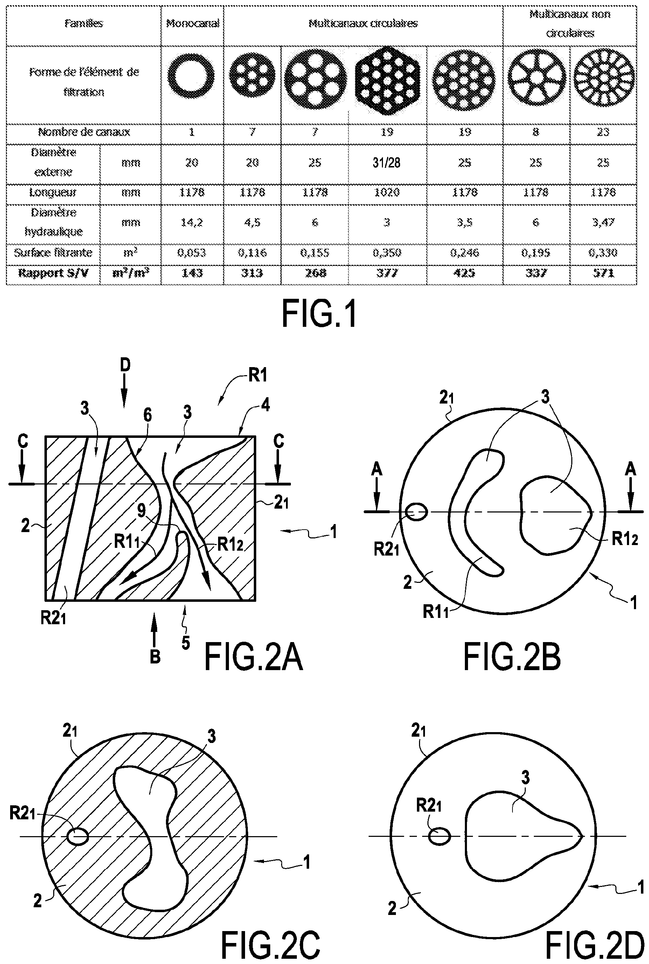

Le tableau de la **Fig. 1** illustre ces trois grandes familles de membranes fabriquées à partir de supports tubulaires extrudés et donne pour chacune leur compacité S/V. Il est communément admis par l'homme du métier que les épaisseurs de paroi entre les canaux sont limitées vers les faibles épaisseurs par le procédé d'extrusion lui-même en raison de paramètres physiques tels que principalement les dimensions des particules de matières distribuées dans la pâte extrudée et le niveau de plasticité de cette pâte au regard de la pression nécessaire pour que la pâte franchisse la filière.

Le dimensionnement des canaux à l'intérieur d'un élément de séparation obtenu par extrusion est donc limité, outre des considérations de résistance mécanique et de flux de filtrat dans la porosité même du support poreux, par les forces de frottement qui, entre la pâte céramique et la filière, génèrent un risque d'arrachement et/ou de fissuration.

La compacité des éléments de séparation obtenus par extrusion tend donc vers une limite haute et la présente invention se propose de remédier aux inconvénients des solutions antérieures en fournissant de nouveaux éléments de séparation pour lesquels les espaces réservés pour la circulation interne du fluide à traiter forment des structures tridimensionnelles interconnectées créatrices de surfaces propres à augmenter dans lesdits éléments de séparation, la compacité exprimée par le rapport S/V précédemment décrit d'une part et pour lesquels les épaisseurs des éléments structuraux formant squelette peuvent être de l'ordre de quelques dixièmes de millimètres d'autre part.

Pour atteindre de tels objectifs, l'élément de séparation est un élément monobloc de séparation d'un milieu fluide à traiter en un filtrat et un rétentat, ledit élément de séparation comportant un support monobloc rigide poreux réalisé en un même matériau et présentant d'une part à sa périphérie, une paroi périmétrique continue entre d'un côté du support poreux, une entrée pour le milieu fluide à traiter, et d'un autre côté du support poreux, une sortie pour le rétentat, et d'autre part, intérieurement, au moins une surface recouverte par au moins une couche séparatrice et délimitant une structure ouverte formée par des espaces vides pour la circulation du milieu fluide à traiter, en vue de récupérer à la périphérie du support poreux, un filtrat ayant traversé la couche séparatrice et le support poreux.

Selon l'invention, les espaces vides pour le passage du milieu fluide à traiter qui sont délimités par la surface du support recouverte de la couche séparatrice sont aménagés dans le support poreux pour créer au sein du support poreux, au moins un premier réseau de circulation pour le milieu fluide à traiter comportant au moins deux circuits de circulation pour le milieu fluide, à traiter interconnectés entre eux, entre l'entrée et la sortie du support poreux.

Dans le cadre de l'invention, les nouveaux éléments de séparation possèdent en interne des géométries modulées de telle sorte que c'est la mise en communication d'espaces vides dont on peut faire varier au sein d'un même élément les formes et les dimensions d'une part et la multiplication des circuits de circulation ainsi formés d'autre part qui permettent de faire croître l'aire de la surface filtrante totale de ces nouveaux éléments de séparation ainsi conçus jusqu'à des valeurs de compacité de 2000 m$^2$/m$^3$ et plus.

L'élément de séparation selon l'invention comporte en outre en combinaison l'une et/ou l'autre des caractéristiques additionnelles suivantes :

- les espaces vides pour le passage du milieu fluide sont aménagés dans le support poreux pour créer au sein du support poreux, au moins un deuxième réseau comportant un ou plusieurs circuits de circulation pour le milieu fluide, interconnectés ou non entre eux, entre l'entrée et la sortie du support poreux ;
- au moins un espace vide pour la récupération du filtrat est aménagé dans le support poreux en débouchant à travers la paroi périmétrique du support poreux ;
- chaque structure ouverte est chacune limitée par une seule et même surface continue entre l'entrée et la sortie du support poreux, en étant partout en contact avec le milieu fluide sans présenter d'espace borgne, cette structure ouverte définissant des structures tridimensionnelles à partir de la paroi périmétrique du support poreux ;

- les structures tridimensionnelles possèdent une identité et une continuité de matériau et de texture poreuse jusqu'à la paroi périmétrique ;

- la structure ouverte définit des structures tridimensionnelles avec des configurations géométriques non répétitives ;
- la structure ouverte définit des structures tridimensionnelles formées par la répétition d'au moins un motif inscrit dans une unité de volume du support poreux formant une maille à l'intérieur de laquelle un espace morphologiquement prédéfini est laissé vide pour la circulation du fluide à traiter, ladite répétition se faisant d'une part par une juxtaposition parfaite ou partielle du ou des motifs suivant au moins une dimension de l'espace et d'autre part de telle sorte à obtenir la continuité de circulation pour le milieu fluide entre les espaces vides des unités de volume et la continuité du matériau poreux pour l'évacuation du filtrat ;
- la structure ouverte définit des structures tridimensionnelles formées par la répétition d'au moins un motif sans variation, ni de la forme, ni des dimensions du motif ;
- la structure ouverte définit des structures tridimensionnelles formées par la répétition d'au moins un motif dont les dimensions varient graduellement de manière isomorphe suivant au moins une direction et/ou la morphologie varient graduellement de manière isométrique suivant au moins une direction ;
- un motif et la maille qui lui est associée peuvent présenter une ou plusieurs symétries parmi la liste suivante :

  • une symétrie centrale ;
  • une symétrie orthogonale par rapport à une droite ;
  • une symétrie miroir par rapport à un plan ;
  • une symétrie par rotation ;
  • une symétrie par similitude ;

- la répétition du ou des motifs présente une symétrie en relation avec la symétrie externe du support ;
- le support poreux est réalisé en un matériau organique ou inorganique ;
- un support poreux et au moins une couche séparatrice continûment déposée sur les parois des structures tridimensionnelles, chaque couche étant constituée d'une céramique, choisi parmi les oxydes, les nitrures, les carbures ou d'autres matériaux céramiques et leur mélanges, et, en particulier, d'oxyde de titane, d'alumine, de zircone ou d'un de leur mélange, de nitrure de titane, de nitrure d'aluminium, de nitrure de bore, de carbure de silicium, de carbure de titane éventuellement en mélange avec un autre matériau céramique ;
- un support poreux et au moins une couche séparatrice continûment déposée sur les parois des structures tridimensionnelles, chaque couche étant constituée d'un polymère adapté à la séparation envisagée et déposé à partir d'un collodion de ce polymère ;
- le support poreux présente un diamètre moyen de pores appartenant à la gamme allant de 1 $\mu$m à 100 $\mu$m.

La description qui va suivre, en référence aux **Figures** annexées, permet de mieux comprendre l'invention.

La **Figure 1** est un tableau donnant les valeurs de compacité S/V pour différents éléments de séparation connus de l'art antérieur.

La **Figure 2A** est une vue en coupe élévation d'un premier exemple de réalisation d'un élément de séparation conforme à l'invention.

La **Figure 2B** est une vue de dessous de l'élément de séparation illustré à la **Fig. 2A.**

La **Figure 2C** est une vue en coupe prise selon les lignes C-C de l'élément de séparation illustré à la **Fig. 2A.**

La **Figure 2D** est une vue de dessus de l'élément de séparation illustré à la **Fig. 2A.**

La **Figure 3A** illustre une maille cubique élémentaire au sein de laquelle les espaces vides forment un motif cruciforme à symétrie centrale.

Les **Figures 3B** et **3C** sont des vues respectivement en perspective et en plan illustrant l'enchevêtrement de deux circuits réalisés par l'enchevêtrement du motif illustré à la **Fig. 3A.**

La **Figure 3D** illustre un autre exemple de réalisation d'une structure à double circuits résultant de la combinaison d'un motif à symétrie cubique et d'un motif à symétrie tétraédrique.

Les **Figures 4A** à **4D** illustrent la réalisation d'une structure ouverte formée par la répétition d'un motif de forme cruciforme à symétrie centrale par rapport au centre d'une maille cubique dans lequel s'inscrit le motif.

Les **Figures SA** et **5B** illustrent deux autres formes de réalisation d'un motif dans une maille élémentaire cubique.

Les **Figures 6A à 6D** illustrent une variante de réalisation d'un support poreux dans lequel est réalisée une structure ouverte définissant des structures tridimensionnelles par la répétition d'un motif dont les dimensions varient graduellement de manière isomorphe suivant trois directions de l'espace.

Les **Figures 7A** et **7B** sont des vues respectivement en coupe longitudinale et transversale d'un exemple de réalisation d'un support poreux dont la structure ouverte définit des structures tridimensionnelles avec des configurations géométriques non répétitives.

La **Figure 8A** est une vue en coupe élévation d'un exemple de réalisation d'un élément de séparation conforme à l'invention visant à créer un réseau de circulation pour le filtrat.

La **Figure 8B** est une vue de dessous de l'élément de séparation illustré à la **Fig. 8A.**

La **Figure 8C** est une vue en coupe prise selon les lignes **C-C** de l'élément de séparation illustré à la **Fig. 8A.**

La **Figure 8D** est une vue de dessus de l'élément de séparation illustré à la **Fig. 2.**

La **Figure 9** est une vue en coupe longitudinale d'un autre exemple de réalisation d'un élément de séparation conforme à l'invention.

La **Figure 9A** est une vue de côté prise respectivement selon les flèches **A-A** de la **Fig. 9.**

Les **Figures 9B** à **9I** sont des vues en coupe transversale prises respectivement selon les flèches **B** à **I** de la **Fig. 9.**

En préliminaire, quelques définitions des termes utilisés dans le cadre de l'invention vont être données.

Par diamètre moyen de pores, on entend la valeur d50 d'une distribution volumique pour laquelle 50% du volume total des pores correspondent au volume des pores de diamètre inférieur à ce d50. La distribution volumique est la courbe (fonction analytique) représentant les fréquences des volumes des pores en fonction de leur diamètre. Le d50 correspond à la médiane séparant en deux parties égales, l'aire située sous la courbe des fréquences obtenue par pénétration de mercure, pour des diamètres moyens de pores supérieurs ou égaux à 4 nm ou par adsorption de gaz, et notamment de $N_2$, lorsque les diamètres moyens de pores sont inférieurs à 4 nm, ces deux techniques étant retenues comme références dans le cadre de l'invention pour la mesure du diamètre moyen des pores. En particulier, on pourra utiliser les techniques décrites dans :

- la norme ISO 15901-1 :2005, pour ce qui concerne la technique de mesure par pénétration de mercure ;
- les normes ISO 15901-2 :2006 et ISO 15901-3 :2007, pour ce qui concerne la technique de mesure par adsorption de gaz.

L'invention propose des éléments de séparation par flux tangentiel d'un milieu fluide à traiter en un filtrat et un rétentat, qui comporte un support poreux monolithique dont la géométrie est sélectionnée pour délimiter, à l'intérieur du support poreux, des circuits de circulation du milieu fluide à traiter, interconnectés entre eux. De tels supports monolithiques, définis comme étant fait d'une seule pièce en un seul et même matériau, homogène et continu dans tout leur ensemble, sans soudure ni apports exogènes, ne peuvent pas être réalisés par les techniques traditionnelles d'extrusion mais peuvent par contre être réalisés par exemple par des techniques additives comme celles décrites par exemple par la demande de brevet FR 3 006 606.

L'objet de l'invention vise les éléments de séparation d'un milieu fluide par filtration tangentielle, communément appelés membranes de filtration. D'une manière générale et comme illustré sur les **Fig. 2A** à **2D,** de tels éléments de séparation **1** comportent un support monobloc rigide poreux **2** réalisé dans un même matériau. Pour de tels éléments de séparation, le corps constituant le support **2** présente une texture poreuse. Cette texture poreuse est caractérisée par le diamètre moyen des pores déduit de leur distribution mesurée par porométrie par pénétration de mercure.

La texture poreuse du support est ouverte et forme un réseau de pores interconnectés, ce qui permet au fluide filtré par la couche séparatrice de filtration de traverser le support poreux et d'être récupéré en périphérie. Il est d'usage de mesurer la perméabilité à l'eau du support pour qualifier la résistance hydraulique du support, ce qui permet dans le même temps de confirmer l'interconnexion de la texture poreuse. En effet, dans un milieu poreux, l'écoulement stationnaire d'un fluide visqueux incompressible est régi par la loi de Darcy. La vitesse du fluide est proportionnelle au gradient de la pression et inversement proportionnelle à la viscosité dynamique du fluide, via un paramètre caractéristique appelé perméabilité qui peut être mesurée, par exemple, selon la norme française NF X 45-101 de Décembre 1996.

Le plus souvent, le support poreux **2** est réalisé en un matériau inorganique non métallique. De préférence, le support poreux **2** est constitué d'une céramique, choisie parmi les oxydes, les nitrures, les carbures ou d'autres matériaux céramiques et leur mélanges, et, en particulier, parmi l'oxyde de titane, l'alumine, la zircone et leur mélange, le nitrure de titane, le nitrure d'aluminium, le nitrure de bore, et le carbure de silicium éventuellement en mélange avec un autre matériau céramique. Il est à noter que le support poreux peut être réalisé aussi en un matériau organique ou inorganique purement métallique. Par exemple, le support poreux **2** est réalisé en un métal pur comme l'aluminium, le zinc, le cuivre, le titane ou sous forme d'un alliage de plusieurs de ces métaux ou d'aciers inoxydables. Par exemple, le support poreux **2** présente un diamètre moyen de pores appartenant à la gamme allant de 1 $\mu$m à 100 $\mu$m.

Quel que soit le matériau utilisé, l'invention utilise la méthode décrite dans la demande de brevet FR 3 006 606 dans laquelle la fabrication du support fait appel à une méthode additive.

Le support poreux **2** comporte intérieurement, au moins une structure ouverte **3** formée par des espaces vides pour la circulation du milieu fluide à traiter. Ces espaces vides **3** correspondent à des zones du support poreux ne comportant pas de matière poreuse. Ces espaces vides **3** sont aménagés au sein du support poreux **2** de manière que ce support poreux présente en périphérie, une paroi périmétrique **2₁** continue entre une entrée **4** pour le milieu fluide située d'un côté du support poreux, et une sortie **5** pour le rétentat située d'un autre côté du support poreux.

Dans l'exemple de réalisation illustré aux **Fig. 2A** à **2D,** le support poreux **2** présente la forme d'un cylindre de section circulaire. Bien entendu, la forme du support poreux **2** est donnée simplement à titre d'illustration de sorte que le support poreux **2** peut prendre toutes les formes possibles. Dans cet exemple illustré, le support poreux **2** est un élément allongé dont l'entrée **4** pour le milieu fluide à traiter est située à l'une des extrémités du support poreux tandis que la sortie **5** pour le rétentat est située à l'extrémité opposée du support poreux. Ainsi, la structure ouverte formée par les espaces vides **3** aménagés au sein du support poreux communique d'un côté, avec l'entrée **4** du milieu fluide à traiter et de l'autre côté, avec la sortie **5** pour le rétentat. Comme cela sera illustré dans la suite de la description, le milieu fluide entre ou sort respectivement de l'entrée **4** ou la sortie **5** du support poreux, par une ou plusieurs ouvertures séparées. En d'autres termes, la structure ouverte **3** pour la circulation du milieu fluide est aménagée dans le support poreux **2** pour déboucher d'une part, du côté entrée du support poreux par une ou plusieurs ouvertures formant l'entrée **4** et d'autre part, du côté sortie du support poreux par ou une plusieurs ouvertures formant la sortie **5.**

La partie du support poreux **2** délimitant la structure ouverte **3** présente une surface recouverte par au moins une couche séparatrice **6**, destinée à être en contact avec le milieu fluide à traiter, circulant à l'intérieur de la structure ouverte **3**. Une partie du milieu fluide à traiter traverse la couche séparatrice **6** et le support poreux **2,** de sorte que cette partie traitée du fluide, appelée filtrat ou perméat, s'écoule par la paroi périmétrique ou la surface extérieure **2₁** du support poreux. Le filtrat est récupéré sur la surface périphérique du support poreux par tous moyens appropriés.

La couche séparatrice de filtration **6** qui recouvre les parois de la structure ouverte **3** assure la filtration du milieu fluide à traiter. En d'autres termes, la structure ouverte **3** dépourvue de matière poreuse se trouve entourée entre l'entrée **4** et la sortie **5,** par la couche séparatrice de filtration **6**. Les couches séparatrices de filtration, par définition, se doivent d'avoir un diamètre moyen de pores inférieur à celui du support poreux **2**. Les couches séparatrices délimitent la surface de l'élément de séparation par flux tangentiel destinée à être en contact avec le fluide à traiter et sur laquelle va circuler le fluide à traiter.

Un élément de séparation, par flux tangentiel, présente généralement une longueur de 1 mètre à 1,5 mètre. La section d'un élément de séparation par flux tangentiel présente le plus souvent une surface de 0,8 cm² à 14 cm². Les épaisseurs des couches séparatrices de filtration varient typiquement entre 1 et 100 μm d'épaisseur. Bien entendu, pour assurer sa fonction de séparation, et servir de couche active, les couches séparatrices présentent un diamètre moyen de pores inférieur au diamètre moyen de pores du support. Le plus souvent, le diamètre moyen de pores des couches séparatrices de filtration est au moins inférieur d'un facteur **3,** et de préférence, d'au moins un facteur **5** par rapport à celui du support.

Les notions de couches séparatrices de microfiltration, ultrafiltration et nanofiltration sont bien connues de l'homme de l'art. Il est généralement admis que :

- les couches séparatrices de microfiltration présentent un diamètre moyen de pores compris entre 0,1 et 2 μm ;
- les couches séparatrices d'ultrafiltration présentent un diamètre moyen de pores compris entre 0,01 et 0,1 μm ;
- les couches séparatrices de nanofiltration présentent un diamètre moyen de pores compris entre 0,5 et 10 nm.

Il est possible que cette couche de micro ou d'ultrafiltration soit déposée directement sur le support poreux (cas d'une couche de séparation monocouche), ou encore sur une couche intermédiaire de diamètre moyen de pores moindre, elle-même déposée directement sur le support poreux. La couche de séparation peut, par exemple, être à base de, ou constituée exclusivement, d'un ou plusieurs oxydes métalliques, carbure ou nitrure ou autres céramiques. En particulier, la couche de séparation est constituée par au moins une couche séparatrice continûment déposée sur les parois des structures tridimensionnelles, chaque couche étant constituée d'une céramique, choisi parmi les oxydes, les nitrures, les carbures ou d'autres matériaux céramiques et leur mélanges, et, en particulier, d'oxyde de titane, d'alumine, de zircone ou d'un de leur mélange, de nitrure de titane, de nitrure d'aluminium, de nitrure de bore, de carbure de silicium, de carbure de titane éventuellement en mélange avec un autre matériau céramique. Par ailleurs, la couche séparatrice **6** peut être constituée par au moins une couche séparatrice continûment déposée sur les parois des structures tridimensionnelles, chaque couche étant constituée d'un polymère adapté à la séparation envisagée et déposé à partir d'un collodion de ce polymère.

Selon une caractéristique essentielle de l'invention, les espaces vides **3** pour le passage du milieu fluide à traiter sont aménagés dans le support poreux **2** pour créer au sein du support poreux, au moins un premier réseau **R₁** et d'une manière générale K réseaux **R1, R2, ..., RK** avec au moins un réseau **R1** comportant au moins deux circuits **R1₁, R1₂** de circulation pour le milieu fluide à traiter et d'une manière générale N circuits **R1₁, R1₂, ..., R1ₙ,** interconnectés entre eux (avec N supérieur ou égal à 2), entre l'entrée **4** et la sortie **5** du support poreux. Ainsi, le milieu fluide circule au moins dans un premier réseau **R1** comportant au moins deux circuits **R1₁, R1₂** de circulation communiquant chacun avec l'entrée **4** et la sortie **5** du support poreux, ces deux circuits **R1₁, R1₂** de circulation communiquant entre eux entre l'entrée **4** et la sortie **5** du support poreux. Bien entendu, une partie du milieu fluide à traiter circulant dans ces réseaux et circuits, traverse la couche séparatrice **6** et le support **2** de sorte que cette partie traitée, dite perméat ou filtrat est récupérée à la surface périphérique du support.

Il est à noter que le milieu fluide peut circuler dans au moins un deuxième réseau **R2** comportant un circuit de

circulation $R2_1$ ou une série de circuits de circulation $R2_1$, $R2_2$, $R2_3$, ... connectés entre eux. Chacun de ces réseaux **R1, R2, ..., R2K** est considéré comme indépendant par rapport aux autres réseaux dans le sens où le milieu fluide à traiter circulant dans le ou les circuits d'un réseau ne circule pas dans le ou les circuits d'un autre réseau.

Au cours de son trajet au sein du support poreux **2** dans le premier réseau **R1,** le milieu fluide à traiter est apte à rencontrer au moins soit une bifurcation ou séparation conduisant le milieu fluide à se séparer en plusieurs parties (au moins deux) pour suivre des trajets différents, et/ou soit une jonction conduisant à la réunion de plusieurs parties du milieu fluide à traiter (au moins deux) provenant de trajets différents. Ainsi, les circuits $R1_1$, $R1_2$ de circulation du réseau **R1** communiquent entre eux par des croisements ou des interconnexions **9** aménagés au sein du support poreux.

Bien entendu, le nombre de circuits de circulation du milieu fluide à traiter formant un réseau peut varier entre 2 et N, avec N entier. De même, le nombre d'interconnexions **9** entre les circuits de circulation peut varier de 1 à M. Ces interconnexions sont aménagées entre les circuits de circulation formant un réseau de circulation. De même, il est à noter que les circuits de circulation communiquent avec l'entrée **4** et la sortie **5** du support poreux, dans des zones communes ou séparées du support poreux.

Dans l'exemple de réalisation illustré aux **Fig. 2A** à **2D,** le support poreux 2 comporte un premier réseau **R1** de circulation pour le milieu fluide à traiter comportant deux circuits $R1_1$, $R1_2$ de circulation pour le milieu fluide, présentant une entrée commune **4** et deux ouvertures distinctes formant la sortie **5.** Ces deux circuits $R1_1$, $R1_2$ de circulation possèdent un tronçon commun depuis l'entrée **4** jusqu'à une interconnexion **9** permettant aux deux circuits $R1_1$, $R1_2$ de circulation d'être interconnectés entre eux. A partir de l'interconnexion **9,** le milieu fluide à traiter est séparé en deux parties jusqu'à la sortie **5.** Les deux circuits $R1_1$, $R1_2$ de circulation débouchent ainsi au niveau de la sortie **5** selon deux ouvertures distinctes.

Bien entendu, l'exemple de réalisation illustré aux **Fig. 2A** à **2D** est donné à titre d'illustration du principe de l'invention. Comme expliqué ci-dessus, le nombre de circuits $R1_1$, $R1_2$, ..., $R1_N$ de circulation formant un réseau peut être quelconque. De même, les interconnexions **9** aménagées dans les circuits de circulation sont en nombre quelconque, ce nombre étant identique ou différent dans les différents circuits de circulation.

Dans l'exemple de réalisation illustré aux **Fig. 2A** à **2D,** le support poreux **2** comporte un deuxième réseau **R2** comportant un unique circuit $R2_1$ de circulation pour le milieu fluide, communiquant avec l'entrée **4** et la sortie **5.** Cet unique circuit $R2_1$ de circulation du deuxième réseau **R2** communique avec aucun des circuits de circulation du premier réseau **R1.** Bien entendu, ce deuxième réseau $R_2$ peut comporter plusieurs circuits de circulation pour le milieu fluide, interconnectés entre eux, entre l'entrée et la sortie du support poreux, comme expliqué ci-dessus.

Il ressort de la description qui précède que les espaces vides 3 aménagés dans le support poreux pour le passage du milieu fluide définissent une ou plusieurs structures ouvertes correspondant chacune à un réseau. Selon une caractéristique avantageuse, chaque structure ouverte est chacune limitée par une seule et même surface continue entre l'entrée et la sortie du support poreux, en étant partout en contact avec le milieu fluide à traiter sans présenter d'espace borgne. En d'autres termes, les espaces vides sont aménagés afin de ne pas créer des zones de rétention pour le milieu fluide dans lequel le milieu fluide à traiter peut stagner. Tel est le cas par exemple pour un tronçon de circuit borgne dont l'entrée et la sortie du milieu fluide sont situées au même endroit en considération du sens de circulation du fluide, le milieu fluide stagnant ou rebroussant chemin entre l'entrée/sortie et le fond du circuit borgne.

Selon une caractéristique avantageuse, il est à considérer que cette structure ouverte aménagée pour réaliser un réseau de circuits interconnectés définit des structures tridimensionnelles jusqu'à la paroi périmétrique $2_1$ du support poreux.

Selon une caractéristique de l'invention, ces structures tridimensionnelles possèdent une identité et une continuité de matériau et de texture poreuse jusqu'à l'extérieur de la paroi périmétrique $2_1$. En d'autres termes, le matériau constitutif de ces structures tridimensionnelles est identique et présente une texture poreuse constante à la précision près du procédé de fabrication.

Selon une caractéristique avantageuse de réalisation, les structures tridimensionnelles sont formées par la répétition d'au moins un motif **11** inscrit dans une unité de volume du support poreux formant une maille **12** à l'intérieur de laquelle un espace morphologiquement prédéfini **3** est laissé vide pour la circulation du fluide à traiter. La répétition du motif **11** se fait d'une part par une juxtaposition parfaite ou partielle du ou des motifs suivant au moins une dimension de l'espace et d'autre part de telle sorte à obtenir la continuité de circulation pour le milieu fluide entre les espaces vides **3** des unités de volume et la continuité du matériau poreux pour l'évacuation du filtrat.

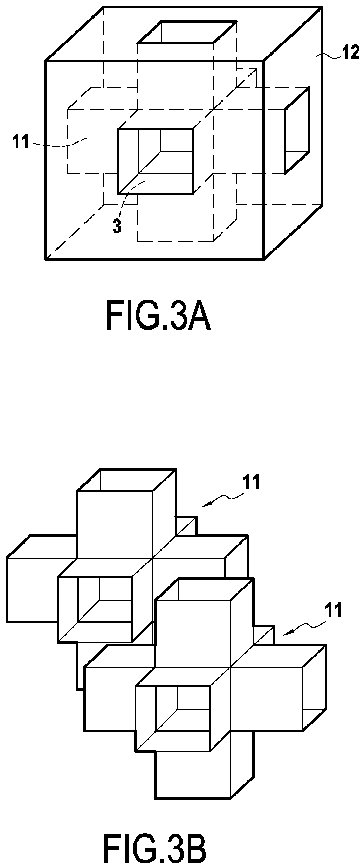

La **Fig. 3A** illustre une maille cubique **12** élémentaire au sein de laquelle les espaces vides **3** pour former la structure est un motif cruciforme **11** à symétrie centrale. Le motif **11** présente une forme en croix dans un plan avec dans l'exemple illustré, une section carrée pour les différentes parties du motif.

L'utilisation d'une telle maille **12** associée à un tel motif **11** trouve dans le cadre de l'invention une application particulièrement avantageuse dans le cas où la structure est formée par l'enchevêtrement de deux circuits de circulation identiques.

Pour simplifier la description de cette structure, il est proposé de caractériser une maille cubique **12** enveloppant un motif cruciforme symétrique **11** avec **c** le côté de cette maille cubique **12** dans laquelle s'inscrit le motif, avec **a** la cote caractérisant l'ouverture carrée du motif affleurant à la frontière de la maille et avec **L** la longueur caractéristique de chaque portion de réseau de section carrée, la surface filtrante du motif est donnée par la formule suivante :

$$S_{motif} = 6 \times (4a \times L)$$

avec $L = \dfrac{c-a}{2}$ on obtient :

$$S_{motif} = 6 \times \left(4a \times \left(\frac{c-a}{2}\right)\right) = 12a(c-a)$$

Le volume de la maille valant $V_{maille} = c^3$ , la compacité de l'élément de séparation obtenu par l'empilement et la juxtaposition de cette maille contenant ce motif est obtenue avec la formule suivante :

$$\frac{S_{motif}}{V_{maille}} = \frac{12a(c-a)}{c^3}$$

Si l'on assimile le circuit obtenu à une composition de canaux de section carrée interconnectés, leur diamètre hydraulique Dh est alors égal à a et il devient possible de comparer la compacité d'une telle structure objet de l'invention, formée par deux circuits de ce type, avec les compacités précédemment décrites pour les éléments de séparation obtenus par extrusion.

Un élément de séparation ainsi fabriqué, avec un **a** fixé à 3,47 mm et un **c** égal à 7,94 mm possède une épaisseur **e** de matière poreuse minimum séparant les deux circuits égale à 0,5 mm et une compacité intrinsèque égale à :

$$2 \times \frac{S_{motif}}{V_{maille}} = 2 \times \frac{12a(c-a)}{c^3} = 24 \times \frac{3,47(7,94-3,47)}{7,94^3} \cong 0,744\ mm^2\!/mm^3$$

ce qui correspond à une compacité de 743,7 m²/m³ que l'on compare avec un élément de filtration obtenu par extrusion de diamètre extérieur de 25 mm, d'une longueur de 1178 mm et possédant vingt-trois canaux non circulaires rectilignes de diamètre hydraulique Dh=3,47 mm en constatant un gain en compacité de l'ordre de 30%.

| Dh = 3,47 mm | Multicanaux rectilignes | Double circuits exemple 1 |
|---|---|---|
| Compacité | 571 m²/m³ | 744 m²/m³ |
| Gain en compacité | | + 30% |

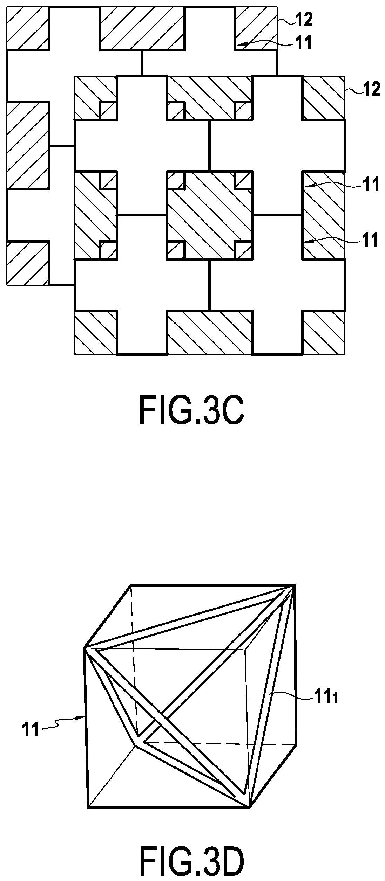

Les **Fig. 3B** et **3C** illustrent et cotent l'enchevêtrement des deux circuits réalisés par l'enchevêtrement du motif illustré à la figure **3A.**

La même construction d'une structure à double circuits identiques donne pour un diamètre hydraulique Dh de 1,60 mm, en comparaison avec un élément de filtration obtenu par extrusion de diamètre extérieur de 20 mm et d'une longueur de 1178 mm possédant soixante et un canaux non circulaires rectilignes de diamètre hydraulique Dh=1,60 mm, un gain en compacité de 28% :

| Dh = 1,60 mm | Multicanaux rectilignes | Double circuits exemple 1 |
|---|---|---|
| Compacité | 1054 m²/m³ | 1347 m²/m³ |
| Gain en compacité | | + 28% |

La même construction d'une structure à double circuits identiques donne pour un diamètre hydraulique Dh de 6,00 mm, en comparaison d'un élément de filtration obtenu par extrusion de diamètre extérieur de 25 mm et d'une longueur de 1 178 mm possédant huit canaux non circulaires rectilignes de diamètre hydraulique Dh=6,00 mm, un gain en compacité de 36% :

| Dh = 6,00 mm | Multicanaux rectilignes | Double circuits exemple 1 |
|---|---|---|
| Compacité | 337 m$^2$/m$^3$ | 459 m$^2$/m$^3$ |
| Gain en compacité | | + 36% |

La **Fig. 3D** illustre un autre exemple de réalisation d'une structure à double circuits résultant de la combinaison d'un motif à symétrie cubique **11** et d'un motif à symétrie tétraédrique **11$_1$**. Le circuit formé par les vides interconnectés suit pour le premier, les arrêtes et les diagonales des faces d'un cube et pour le second les arrêtes d'un octaèdre placé au centre du même cube

Cette combinaison de deux motifs mène à la construction d'un mono-réseau pour lequel on constate que la maille élémentaire, cubique, contient un ensemble d'espaces vides interconnectés de motif tétraédrique régulier.

L'empilement d'un tel motif dans les trois directions de l'espace, en imposant au motif des rotations successives afin que les espaces vides des arrêtes du tétraèdre coïncident et se juxtaposent de manière répétitive et continue permet d'obtenir, en reprenant à titre d'exemple et de comparaison les mêmes éléments de séparation extrudés et les trois mêmes diamètres hydrauliques utilisés dans l'exemple 1, les nouvelles valeurs de compacité suivantes :

| | Dh=1,60 mm | Dh=3,47 mm | Dh=6,00 mm |
|---|---|---|---|
| Multicanaux rectilignes | 1054 m$^2$/m$^3$ | 571 m$^2$/m$^3$ | 337 m$^2$/m$^3$ |
| Mono réseau exemple 2 | 2358 m$^2$/m$^3$ | 987 m$^2$/m$^3$ | 560 m$^2$/m$^3$ |
| Gain en compacité | + 123% | + 72% | + 66% |

On constate avec une telle structure des gains en compacité de 66%, 72% et 123% pour respectivement des diamètres hydrauliques de 6 mm, 3,47 mm et 1,6 mm.

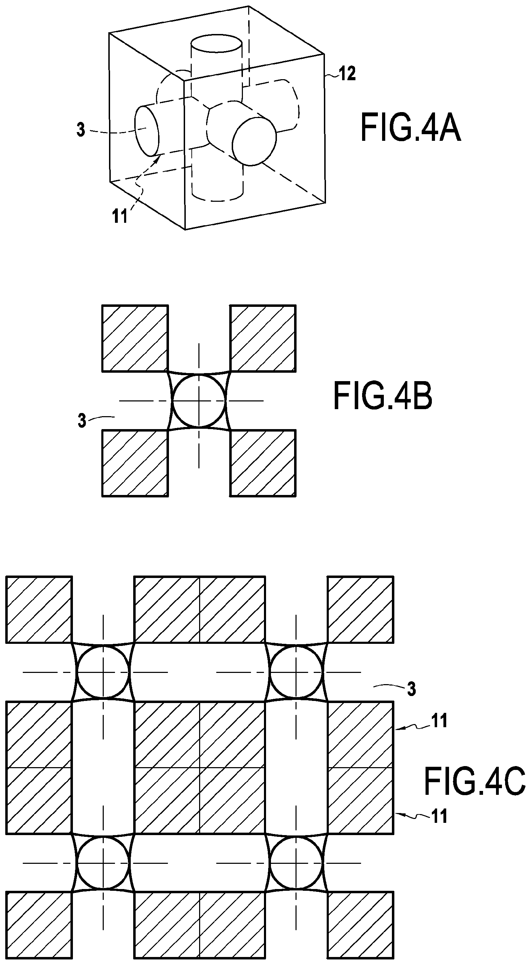

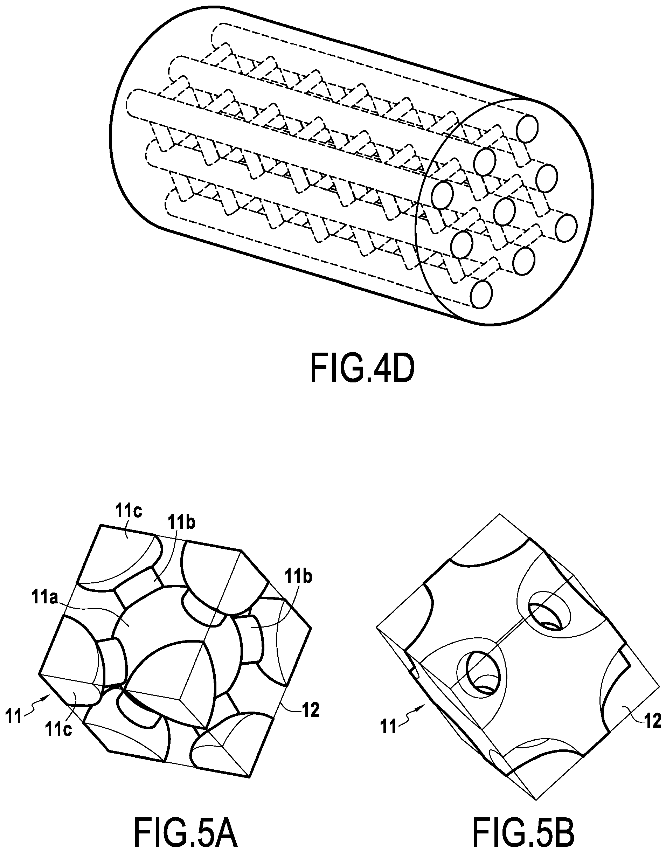

Les **Fig. 4A** à **4D** illustrent la réalisation d'une structure ouverte **3** formée par la répétition d'un motif **11** de forme cruciforme à symétrie centrale par rapport au centre d'une maille cubique **12** dans lequel s'inscrit le motif. Selon cet exemple, le motif **11** présente une forme en croix dans un plan avec une section circulaire pour les différentes parties du motif. Le motif illustré à la **Fig. 4A** et correspondant à l'espace laissé vide pour la circulation du milieu fluide est répété par empilement de la maille et du motif, de manière identique selon une, deux ou les trois dimensions de l'espace.

Les **Fig. 5A** et **5B** illustrent deux autres formes de réalisation d'un motif **12** dans une maille élémentaire cubique **12**. Les motifs illustrés **11** sont complémentaires dans le sens où si le motif illustré à la **Fig. 5A** correspond à l'espace vide alors le motif illustré à la **Fig. 5B** correspond à la matière poreuse, et réciproquement. Chaque motif **11** comporte une sphère centrale **11a** reliée à l'aide de huit cylindres **11b** orientés vers un coin de la maille, à huit quart de sphère **11c** s'appuyant chacun sur trois côtés contigus de la maille **12**. La juxtaposition de cette maille **12** permet d'obtenir une structure formée de sphères connectées entre elles par des cylindres.

Il est clair qu'il peut être envisagé d'utiliser des motifs **11** avec des formes diversifiées. Par exemple, un motif **11** et la maille qui lui est associée peuvent présenter une ou plusieurs symétries parmi la liste suivante :

- une symétrie centrale ;
- une symétrie orthogonale par rapport à une droite ;
- une symétrie miroir par rapport à un plan ;
- une symétrie par rotation ;
- une symétrie par similitude.

De même, il est à noter que la répétition du ou des motifs **11** peut présenter une symétrie en relation avec la symétrie externe du support. Dans ce cas, le support poreux peut présenter un profil externe variable, présentant ou non une symétrie.

Dans les exemples qui précèdent, la structure ouverte **3** définit des structures tridimensionnelles formées par la répétition d'au moins un motif **11** sans variation, ni de la forme, ni des dimensions du motif.

Bien entendu, il peut être envisagé de réaliser la structure ouverte **3** définissant des structures tridimensionnelles par la répétition d'au moins un motif **11** dont les dimensions varient graduellement de manière isomorphe suivant au moins une direction et/ou la morphologie varient graduellement de manière isométrique suivant au moins une direction.

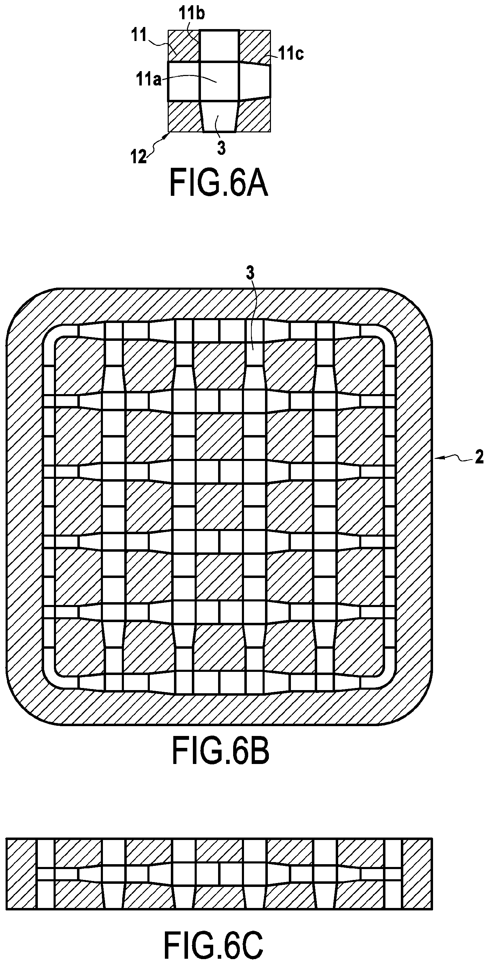

Les **Fig. 6A** à **6D** illustrent une variante de réalisation d'un support **2** poreux dans lequel est réalisée une structure ouverte **3** définissant des structures tridimensionnelles par la répétition d'un motif **11** dont les dimensions varient graduellement de manière isomorphe suivant trois directions de l'espace. Selon cette variante, le motif **11** illustré à la **Fig. 6A** est inscrit dans une maille carrée **12** et comporte un carré central **11a** bordé sur deux côtés adjacents par deux rectangles identiques **11b** et sur ses deux autres côtés adjacents, par deux trapèzes identiques **11c.**

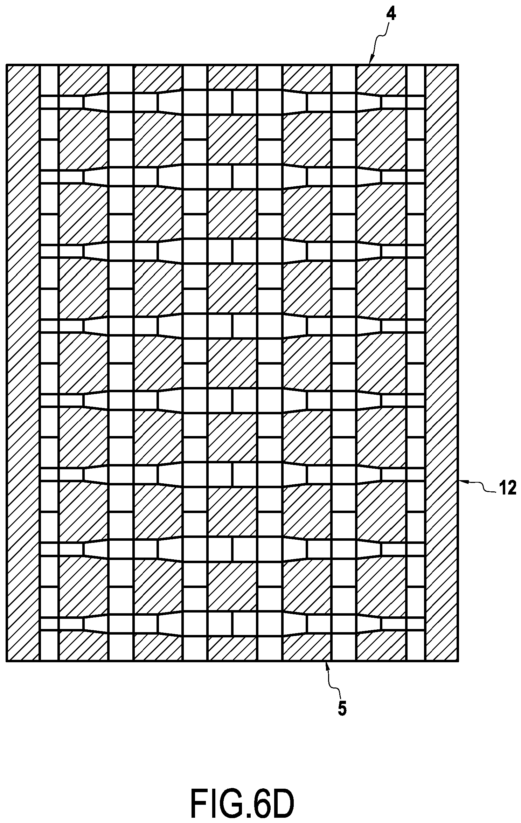

En juxtaposant un tel motif **11** dans deux directions x et y et en faisant varier graduellement de manière isomorphe et en ajustant de proche en proche les dimensions des espaces correspondant aux rectangles **11b,** carré **11a** et trapèze **11c** permet d'obtenir un support tel qu'illustré à la **Fig. 6B.** Bien entendu, les motifs **11** périphériques sont adaptés pour ne pas créer d'espaces borgnes susceptibles de générer des espaces de rétention durable du milieu fluide. Il est constaté un accroissement progressif vers la périphérie de la matière poreuse, facilitant l'évacuation du filtrat. Cette juxtaposition suivant les directions x et y forme elle-même un motif (**Fig. 6C**) qui empilé identiquement, par exemple huit fois suivant une troisième direction z, permet la formation d'une structure s'étendant de manière continue entre l'entrée **4** et la sortie **5** du support poreux **12** (**Fig. 6D**).

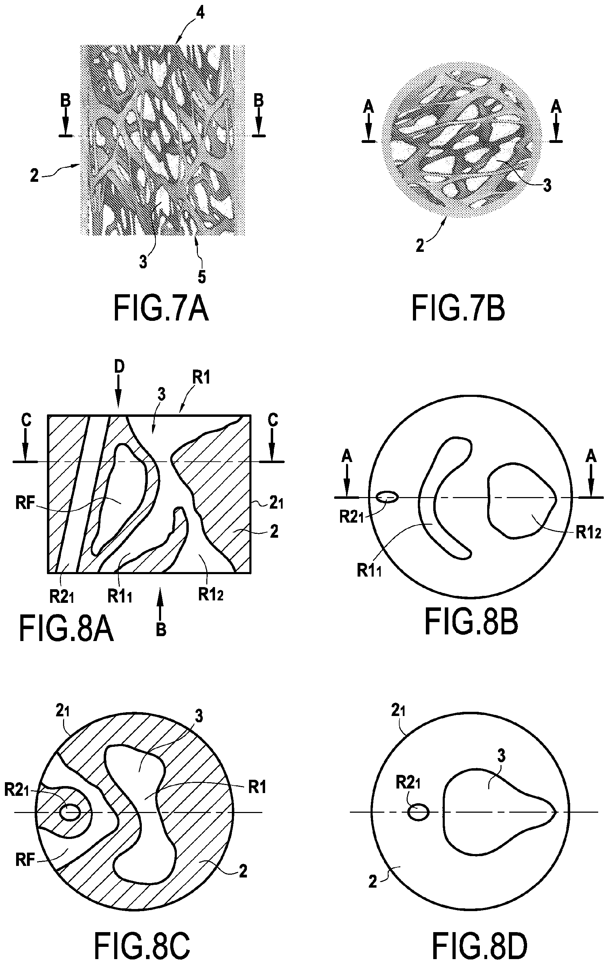

Dans les exemples de réalisation décrits précédemment, la structure ouverte **3** définit des structures tridimensionnelles avec des configurations géométriques répétitives. Les **Fig. 7A** et **7B** illustrent un exemple de réalisation d'un support poreux **2** dont la structure ouverte **3** définit des structures tridimensionnelles avec des configurations géométriques non répétitives. Ainsi, les structures tridimensionnelles sont réalisées de manière désordonnée sans répétition en construisant bien entendu une continuité de matière poreuse pour l'évacuation du filtrat à travers la matière poreuse et la continuité des espaces vides pour la circulation du milieu fluide entre l'entrée **4** et la sortie du support **12** sans créer de zones borgnes.

Dans les exemples qui précèdent, les espaces vides **3** sont créés dans la matière poreuse pour permettre la circulation du milieu fluide. Les **Fig. 8A** à **8D** illustrent un exemple de réalisation d'un support poreux **2** dans lequel est aménagé un réseau de récupération pour le filtrat **RF** débouchant à travers la paroi périmétrique **2₁** du support poreux. Bien entendu, un tel réseau de récupération **RF** pour le filtrat est indépendant du ou des réseaux de circulation **R1, R2, ..., RK** pour le milieu fluide. Ce réseau de récupération pour le filtrat **RF** laisse une partie de matériau poreux constitutif du support poreux, subsister entre cet espace vide et des réseaux de circulation mais également entre cet espace vide et les côtés entrée **4** et sortie **5** du support. Un tel réseau de récupération pour le filtrat **RF** est créé pour faciliter l'évacuation du filtrat vers l'extérieur du support poreux.

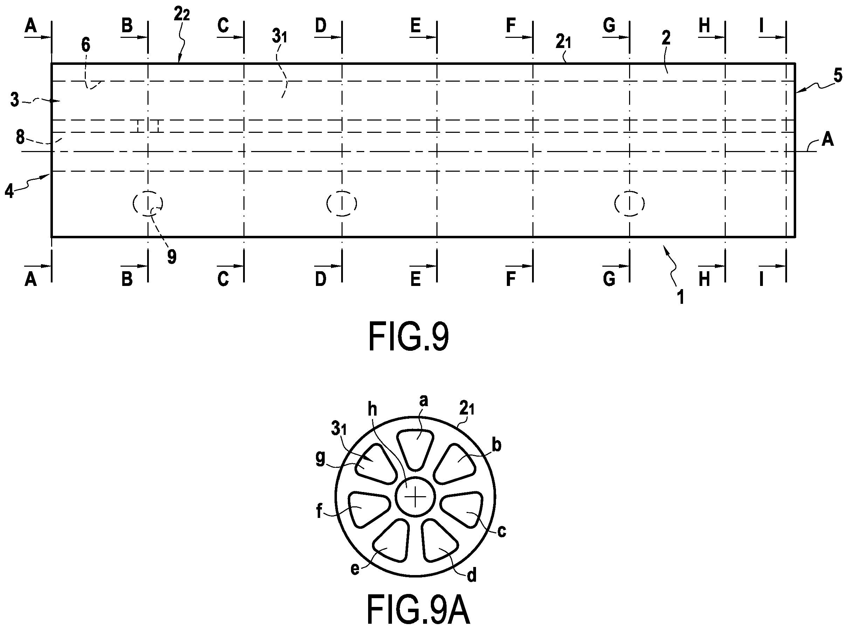

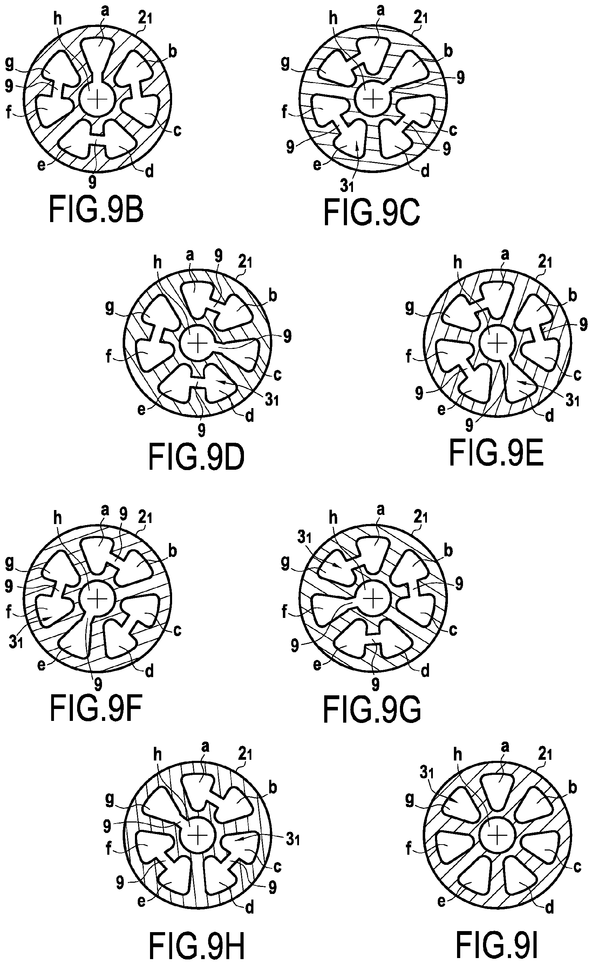

Les **Fig. 9** à **9I** illustrent un autre exemple d'un élément de séparation par flux tangentiel **1** de géométrie tubulaire. L'élément de séparation par flux tangentiel **1** comporte un support poreux **2** réalisé sous une forme allongée s'étendant selon un axe central longitudinal **A** de sorte que la structure de ce support poreux est qualifiée de rectiligne. Le support poreux **2** illustré aux **Fig. 9, 9I** possède une section droite transversale circulaire et présente ainsi une surface extérieure cylindrique, mais la section droite transversale pourrait être quelconque ou polygonale.

Le support poreux **2** est aménagé pour comporter intérieurement, un unique réseau de circulation **3** pour le milieu fluide à traiter circulant entre une entrée **4** et une sortie **5.** Dans l'exemple illustré, l'entrée **4** est située à une extrémité du support poreux **2** et la sortie **5** à l'autre extrémité du support poreux **2.** Le support poreux **2** comporte des espaces vides ou des passages **3** pour former des circuits de circulation pour le milieu fluide à traiter. Le support poreux **2** est aménagé pour comporter sur toute sa périphérie, une paroi périmétrique **2₁** entourant les espaces vides ou les passages. La paroi périmétrique **2₁** qui est délimitée par la surface extérieure **2₂** du support poreux **2** s'étend de manière continue entre l'entrée **4** et la sortie **5.**

Le support poreux **2** comporte à partir de sa paroi continue périmétrique **6,** un arrangement tridimensionnel de structures reliés les unes aux autres en laissant subsister entre eux les espaces vides **3** pour le passage du milieu fluide pour créer un réseau de circulation comportant une série de circuits de circulation **R1, R2, ..., RK** pour le milieu fluide, interconnectés entre eux, entre l'entrée **4** et la sortie **5** du support poreux.

Comme expliqué, les structures tridimensionnelles font partie intégrante du support poreux monobloc, c'est-à-dire qu'il résulte de la géométrie même donnée au support poreux et ne sont nullement des éléments rapportés. L'ensemble forme un même monobloc poreux, sans liaison, ni interface, ni joint d'aucune sorte. Il existe une identité et une continuité de matériau et de texture poreuse entre les structures tridimensionnelles et la paroi périmétrique **2₁.** Ainsi, les structures tridimensionnelles sont solides mécaniquement et chimiquement d'égale résistance que la paroi périmétrique **2₁.**

Dans l'exemple de réalisation illustré aux **Fig. 9** à **9I,** les espaces vides **3** forment un seul réseau **R1** comportant une série de circuits de circulation **R1₁, R1₂, ...,** connectés entre eux, entre l'entrée **4** et la sortie **5** du support poreux. Selon cet exemple, les circuits de circulation sont réalisés par les passages ou espaces vides **3** se présentant sous la forme de sept canaux périphériques **a** à **g** distribués selon une circonférence du support poreux, d'un canal central **h** aménagé au centre du support poreux et de passages de communication ou d'interconnexions **9** entre les canaux.

Les canaux **a** à **h** sont réalisés dans l'exemple illustré, parallèlement les uns aux autres sur toute la longueur du support poreux. Entre l'entrée **4** et la section **B-B,** les canaux **a** à **h** sont indépendants les uns des autres. Au niveau de la section **B-B,** les canaux **a** à **h** sont interconnectés entre eux comme cela apparaît à la **Fig. 9B.** Plus précisément, des espaces libres ou des interconnexions **9** sont créés d'une part, entre les paires de canaux périphériques voisins à savoir **b-c, d-e** et **f-g** et, d'autre part, entre le canal central **h** et le canal périphérique non communiquant avec un autre à savoir le canal **a** dans l'exemple illustré. Ces espaces libres ou interconnexions **9** qui subsistent en raison de l'arrangement de structures tridimensionnelles constituent des passages de communication entre les canaux, ces interconnexions **9** s'étendant dans l'exemple illustré, de manière transversale par rapport aux canaux.

Dans l'exemple illustré, cet arrangement de structures tridimensionnelles et d'interconnexions est répété en différentes sections du support poreux, selon un pas régulier, en effectuant une permutation circulaire au niveau des interconnexions **9** entre les canaux. Ainsi, au niveau de la section **C-C** du support poreux qui suit la section **B-B** en considération du sens de circulation du milieu fluide à traiter (**Fig. 9C**), les canaux **a** à **h** sont interconnectés entre eux avec création d'espaces libres ou d'interconnexions **9** entre les canaux **a-g, b-h, c-d** et **e-f**. De même, au niveau de la section **D-D** du support poreux qui suit la section **C-C** en considération du sens de circulation du milieu fluide à traiter (**Fig. 9D**), les canaux **a** à **h** sont interconnectés entre eux avec création d'espaces libres ou d'interconnexions **9** entre les canaux **a-b, c-h, d-e** et **f-g.**

Dans l'exemple illustré, les canaux **a** à **h** sont interconnectés entre l'entrée et la sortie, sept fois par des interconnexions **9** de sorte que le milieu fluide à traiter entrant par l'entrée **4** est à même de circuler dans chacun des canaux jusqu'à sa sortie **5**. Les canaux **a** à **h** et les interconnexions **9** forment ensemble une série de circuits **R1, R2, ...,** **RK** interconnectés entre eux.

Bien entendu, il peut être prévu de réaliser dans le support poreux, un réseau avec des circuits de circulation présentant un nombre différent de ceux décrits et des interconnexions différentes de celles choisies. Dans le même sens, il peut être avantageux de réaliser dans le support poreux, plusieurs réseaux de circuits de circulation du milieu fluide interconnectés entre eux, avec les circuits d'un réseau qui sont indépendants des circuits des autres réseaux. Par exemple, l'élément de séparation **1** peut comporter un premier réseau de circuits interconnectés entre eux formés par les canaux **a, h, e, d** reliés entre eux, selon différentes sections par des passages de communication **9,** un deuxième réseau de circuits interconnectés entre eux formés par les canaux **b** et **c** reliés entre eux, selon au moins une et d'une manière générale, différentes sections par des passages de communication **9,** et un troisième réseau de circuits interconnectés entre eux, formés par les canaux **f** et **g** reliés entre eux, selon au moins une et d'une manière générale, différentes sections par des passages de communication **9.** Les circuits de chacun de ces trois réseaux sont indépendants entre eux, c'est-à-dire qu'ils ne communiquent pas entre eux.

Bien entendu, un réseau peut comporter un nombre plus ou moins importants de circuits de circulation interconnectés entre eux, par des interconnexions **9** répétées selon un pas régulier ou irrégulier. Dans le même sens, les circuits de circulation peuvent présenter des formes et des dimensions très diversifiées. Dans l'exemple de réalisation illustré aux **Fig. 9** à **9I**, les circuits de circulation connectés entre eux comportent des canaux **a** à **g** de section triangulaire, un canal central **h** de section circulaire et des interconnexions **9** de section circulaire. Il est clair que la section des canaux et des interconnexions **9** peut être différente des sections représentées simplement à titre d'illustration.

Il ressort de la description qui précède que l'élément de séparation par flux tangentiel **1** présente une nouvelle géométrie pour le réseau de circulation du milieu fluide permettant une évolution progressive ou séquentielle des diamètres hydrauliques des circuits de circulation. Cette nouvelle géométrie pour le réseau de circulation du milieu fluide permet également des ruptures radiales et/ou longitudinales dans la direction de cheminement du milieu fluide dans le but d'augmenter les performances des éléments de séparation.

Dans le cadre de l'invention, la fabrication du support poreux, voire de l'élément de séparation par flux tangentiel dans son entier, est réalisée par exemple grâce à une technique additive telle que décrite par exemple dans la demande de brevet FR 3 006 606.

L'invention n'est pas limitée aux exemples décrits et représentés car diverses modifications peuvent y être apportées sans sortir de son cadre.

## Revendications

**1.** - Elément monobloc de séparation d'un milieu fluide à traiter en un filtrat et un rétentat, ledit élément de séparation comportant un support monobloc rigide poreux (**2**) réalisé en un même matériau et présentant d'une part à sa périphérie, une paroi périmétrique (**2₁**) continue entre d'un côté du support poreux, une entrée (**4**) pour le milieu fluide à traiter, et d'un autre côté du support poreux, une sortie (5) pour le rétentat, et d'autre part, intérieurement, au moins une surface recouverte par au moins une couche séparatrice (**6**) et délimitant une structure ouverte formée par des espaces vides (**3**) pour la circulation du milieu fluide à traiter, en vue de récupérer à la périphérie du support poreux, un filtrat ayant traversé la couche séparatrice et le support poreux, **caractérisé en ce que** les espaces vides (**3**) pour le passage du milieu fluide à traiter qui sont délimités par la surface du support recouverte de la couche séparatrice (**6**), sont aménagés dans le support poreux pour créer au sein du support poreux, au moins un premier réseau de circulation pour le milieu fluide à traiter (**R1, R2, ..., RK**) comportant au moins deux circuits de

circulation ($R1_1$, $R1_2$, ...) pour le milieu fluide à traiter, interconnectés entre eux, entre l'entrée (**4**) et la sortie (**5**) du support poreux.

**2.** - Elément de séparation selon la revendication 1, **caractérisé en ce que** les espaces vides (**3**) pour le passage du milieu fluide sont aménagés dans le support poreux pour créer au sein du support poreux, au moins un deuxième réseau de circulation pour le milieu fluide à traiter (**R, ..., RK**) comportant un ou plusieurs circuits de circulation ($R2_1$, $R2_2$, ...) pour le milieu fluide, interconnectés ou non entre eux, entre l'entrée (**4**) et la sortie (**5**) du support poreux.

**3.** - Elément de séparation selon les revendications 1 ou 2, **caractérisé en ce qu'**au moins un espace vide (**RF**) pour la récupération du filtrat est aménagé dans le support poreux (**2**) en débouchant à travers la paroi périmétrique ($2_1$) du support poreux.

**4.** - Elément de séparation selon l'une des revendications 1 à 3, **caractérisé en ce que** chaque structure ouverte est chacune limitée par une seule et même surface continue entre l'entrée (**4**) et la sortie (**5**) du support poreux, en étant partout en contact avec le milieu fluide sans présenter d'espace borgne, cette structure ouverte définissant des structures tridimensionnelles à partir de la paroi périmétrique du support poreux.

**5.** - Elément de séparation selon la revendication 4, **caractérisé en ce que** les structures tridimensionnelles possèdent une identité et une continuité de matériau et de texture poreuse jusqu'à la paroi périmétrique.

**6.** - Elément de séparation selon l'une des revendications 1 à 5, **caractérisé en ce que** la structure ouverte (**3**) définit des structures tridimensionnelles avec des configurations géométriques non répétitives.

**7.** - Elément de séparation selon l'une des revendications 1 à 6, **caractérisé en ce que** la structure ouverte (**3**) définit des structures tridimensionnelles formées par la répétition d'au moins un motif (**11**) inscrit dans une unité de volume du support poreux formant une maille (**12**) à l'intérieur de laquelle un espace morphologiquement prédéfini est laissé vide pour la circulation du fluide à traiter, ladite répétition se faisant d'une part par une juxtaposition parfaite ou partielle du ou des motifs (**11**) suivant au moins une dimension de l'espace et d'autre part de telle sorte à obtenir la continuité de circulation pour le milieu fluide entre les espaces vides des unités de volume et la continuité du matériau poreux pour l'évacuation du filtrat.

**8.** - Elément de séparation selon la revendication 7, **caractérisé en ce que** la structure ouverte (**3**) définit des structures tridimensionnelles formées par la répétition d'au moins un motif (**11**) sans variation, ni de la forme, ni des dimensions du motif.

**9.** - Elément de séparation selon la revendication 7, **caractérisé en ce que** la structure ouverte (**3**) définit des structures tridimensionnelles formées par la répétition d'au moins un motif (**11**) dont les dimensions varient graduellement de manière isomorphe suivant au moins une direction et/ou la morphologie varient graduellement de manière isométrique suivant au moins une direction.

**10.** - Elément de séparation selon l'une des revendications 7 à 9, **caractérisé en ce qu'**un motif (**11**) et la maille (**12**) qui lui est associée peuvent présenter une ou plusieurs symétries parmi la liste suivante :

- une symétrie centrale ;
- une symétrie orthogonale par rapport à une droite ;
- une symétrie miroir par rapport à un pian ;
- une symétrie par rotation ;
- une symétrie par similitude.

**11.** - Elément de séparation selon l'une des revendications 8 à 10, **caractérisé en ce que** la répétition du ou des motifs (**11**) présente une symétrie en relation avec la symétrie externe du support.

**12.** - Elément de séparation selon l'une des revendications 1 à 11, **caractérisé en ce que** le support poreux (**2**) est réalisé en un matériau organique ou inorganique.

**13.** - Elément de séparation selon l'une des revendications 1 à 12, **caractérisé en ce qu'**il comporte un support poreux (**2**) et au moins une couche séparatrice (**6**) continûment déposée sur les parois des structures tridimensionnelles, chaque couche étant constituée d'une céramique, choisi parmi les oxydes, les nitrures, les carbures ou d'autres matériaux céramiques et leur mélanges, et, en particulier, d'oxyde de titane, d'alumine, de zircone ou d'un de leur mélange, de nitrure de titane, de nitrure d'aluminium, de nitrure de bore, de carbure de silicium, de carbure de titane éventuellement en mélange avec un autre matériau céramique.

**14.** - Elément de séparation selon l'une des revendications 1 à 12, **caractérisé en ce qu'**il comporte un support poreux (**2**) et au moins une couche séparatrice (**6**) continûment déposée sur les parois des structures tridimensionnelles, chaque couche étant constituée d'un polymère adapté à la séparation envisagée et déposé à partir d'un collodion de ce polymère.

**15.** - Elément de séparation selon l'une des revendications 1 à 14, **caractérisé en ce que** le support poreux (**2**) présente un diamètre moyen de pores appartenant à la gamme allant de 1 $\mu$m à 100 $\mu$m.

## Patentansprüche

1. Einstückiges Element zur Trennung eines zu behandelnden Fluidmediums in ein Filtrat und ein Retentat, wobei das Trennelement einen porösen, starren, einstückigen Träger (2) beinhaltet, der aus einem selben Material verwirklicht ist und zum einen an seinem Umfang eine umlaufende Wand ($2_1$), die zwischen einem Eingang (4) für das zu behandelnde Fluidmedium auf einer Seite des porösen Trägers und einem Ausgang (5) für das Retentat auf einer anderen Seite des porösen Trägers durchgängig ist, und zum anderen zumindest eine Oberfläche im Inneren aufweist, die mit zumindest einer Trennschicht (6) bedeckt ist und eine offene Struktur für die Zirkulation des zu behandelnden Fluidmediums begrenzt, die durch Leerräume (3) gebildet wird, um an dem Umfang des porösen Trägers ein Filtrat zu gewinnen, das die Trennschicht und den porösen Träger durchquert hat, **dadurch gekennzeichnet, dass** die Leerräume (3) für den Durchgang des zu behandelnden Fluidmediums, die durch die mit der Trennschicht (6) bedeckte Oberfläche des Trägers begrenzt werden, in dem porösen Träger vorgesehen sind, um innerhalb des porösen Trägers zumindest ein erstes Zirkulationsnetzwerk für das zu behandelnde Fluidmedium (R1, R2, ..., RK) zwischen dem Eingang (4) und dem Ausgang (5) des porösen Trägers zu schaffen, das zumindest zwei Zirkulationskreise ($R1_1$, $R1_2$, ...) für das zu behandelnde Fluidmedium beinhaltet, die untereinander verbunden sind.

2. Trennelement nach Anspruch 1, **dadurch gekennzeichnet, dass** die Leerräume (3) für den Durchgang des Fluidmediums in dem porösen Träger vorgesehen sind, um innerhalb des porösen Trägers zumindest ein zweites Zirkulationsnetzwerk für das zu behandelnde Fluidmedium (R, ..., RK) zwischen dem Eingang (4) und dem Ausgang (5) des porösen Trägers zu schaffen, das einen oder mehrere Zirkulationskreise ($R2_1$, $R2_2$, ...) für das Fluidmedium beinhaltet, die untereinander verbunden sind oder nicht.

3. Trennelement nach den Ansprüchen 1 oder 2, **dadurch gekennzeichnet, dass** zumindest ein Leerraum (RF) für die Gewinnung des Filtrats in dem porösen Träger (2) vorgesehen ist, wobei er durch die umlaufende Wand ($2_1$) des porösen Trägers mündet.

4. Trennelement nach einem der Ansprüche 1 bis 3, **dadurch gekennzeichnet, dass** jede offene Struktur jeweils durch eine einzelne und selbe, zwischen dem Eingang (4) und dem Ausgang (5) des porösen Trägers durchgehende Oberfläche begrenzt ist, wobei sie vollständig mit dem Fluidmedium in Kontakt steht, ohne einen Blindraum aufzuweisen, wobei diese offene Struktur dreidimensionale Strukturen ausgehend von der umlaufenden Wand des porösen Trägers definiert.

5. Trennelement nach Anspruch 4, **dadurch gekennzeichnet, dass** die dreidimensionalen Strukturen bis zu der umlaufenden Wand in Bezug auf Material und poröse Textur identisch sind und diese durchgehend fortsetzen.

6. Trennelement nach einem der Ansprüche 1 bis 5, **dadurch gekennzeichnet, dass** die offene Struktur (3) dreidimensionale Strukturen mit sich nicht wiederholenden geometrischen Konfigurationen definiert.

7. Trennelement nach einem der Ansprüche 1 bis 6, **dadurch gekennzeichnet, dass** die offene Struktur (3) dreidimensionale Strukturen definiert, die durch die Wiederholung zumindest eines Musters (11) gebildet werden, das in eine Volumeneinheit des porösen Trägers eingeschrieben ist und einen Knoten (12) im Inneren bildet, in dessen Innerem ein morphologisch vordefinierter Raum für die Zirkulation des zu behandelnden Fluids freigelassen ist, wobei die Wiederholung zum einen durch eine perfekte oder teilweise Aneinanderreihung des oder der Muster (11) gemäß zumindest einer Dimension des Raums und zum anderen auf solche Weise erfolgt, um eine durchgängige Zirkulation für das Fluidmedium zwischen den Leerräumen der Volumeneinheiten und die Durchgängigkeit des porösen Materials für den Abzug des Filtrats zu erzielen.

8. Trennelement nach Anspruch 7, **dadurch gekennzeichnet, dass** die offene Struktur (3) dreidimensionale Strukturen definiert, die durch die Wiederholung zumindest eines Musters (11) ohne jede Variation der Form oder der Dimensionen des Musters gebildet werden.

9. Trennelement nach Anspruch 7, **dadurch gekennzeichnet, dass** die offene Struktur (3) dreidimensionale Strukturen definiert, die durch die Wiederholung zumindest eines Musters (11) gebildet werden, dessen Dimensionen auf isomorphe Weise gemäß zumindest einer Richtung schrittweise variieren und/oder dessen Morphologie auf isometrische Weise gemäß zumindest einer Richtung schrittweise variiert.

10. Trennelement nach einem der Ansprüche 7 bis 9, **dadurch gekennzeichnet, dass** ein Muster (11) und der Knoten (12), der ihm zugeordnet ist, eine oder mehrere Symmetrien aus der folgenden Liste aufweisen können:

   - eine zentrale Symmetrie,
   - eine orthogonale Symmetrie in Bezug auf eine Gerade,
   - eine Spiegelsymmetrie in Bezug auf eine Ebene,
   - eine Rotationssymmetrie,
   - eine Symmetrie der Ähnlichkeit.

11. Trennelement nach einem der Ansprüche 8 bis 10, **dadurch gekennzeichnet, dass** die Wiederholung des oder der Muster (11) eine Symmetrie in Relation zu der äußeren Symmetrie des Trägers aufweist.

12. Trennelement nach einem der Ansprüche 1 bis 11, **dadurch gekennzeichnet, dass** der poröse Träger (2) aus einem organischen oder anorganischen Material verwirklicht ist.

13. Trennelement nach einem der Ansprüche 1 bis 12, **dadurch gekennzeichnet, dass** es einen porösen Träger (2) und zumindest eine Trennschicht (6) beinhaltet, die durchgehend auf den Wänden der dreidimensionalen Strukturen abgeschieden ist, wobei jede Schicht aus einer Keramik besteht, die aus den Oxiden, Nitriden, Karbiden oder anderen keramischen Materialien und deren Mischungen ausgewählt ist, und insbesondere aus Titanoxid, Aluminiumoxid, Zirkonoxid oder einer ihrer Mischungen, aus Titannitrid, aus Aluminiumnitrid, aus Bornitrid, aus Siliziumkarbid, aus Titankarbid, eventuell in Mischung mit einem weiteren keramischen Material.

14. Trennelement nach einem der Ansprüche 1 bis 12, **dadurch gekennzeichnet, dass** es einen porösen Träger (2) und zumindest eine Trennschicht (6) beinhaltet, die durchgehend auf den Wänden der dreidimensionalen Strukturen abgeschieden ist, wobei jede Schicht aus einem Polymer besteht, das für die beabsichtigte Trennung geeignet ist und aus einem Kollodium dieses Polymers heraus abgeschieden wird.

15. Trennelement nach einem der Ansprüche 1 bis 14, **dadurch gekennzeichnet, dass** der poröse Träger (2) einen mittleren Porendurchmesser aufweist, der in den Bereich von 1 $\mu$m bis 100 $\mu$m fällt.

## Claims

1. A single-piece separator element for separating a fluid medium for treatment into a filtrate and a retentate, said separator element comprising a porous rigid single-piece substrate (2) made out of a single material and presenting firstly, at its periphery, a perimeter wall ($2_1$) that is continuous between an inlet (4) for the fluid medium for treatment at one end of the porous substrate and an outlet (5) for the retentate at the other end of the porous substrate, and secondly, internally, at least one surface covered by at least one separator layer (6) and defining an open structure made up of empty spaces (3) for passing a flow of the fluid medium for treatment in order to recover at the periphery of the porous substrate a filtrate that has passed through the separator layer and the porous substrate, **characterized in that** the empty spaces (3) for passing the fluid medium for treatment that are defined by the surface of the substrate covered by the separator layer (6) are arranged in the porous substrate so as to create within the porous substrate at least a first flow network (R1, R2, ..., RK) for the fluid medium for treatment, the network comprising at least two interconnected flow circuits ($R1_1$, $R1_2$, ...) for the fluid medium for treatment between the inlet (4) and the outlet (5) of the porous substrate.

**2.** A separator element according to claim 1, **characterized in that** the empty spaces (3) for passing the fluid medium are arranged in the porous substrate so as to create within the porous substrate at least a second flow network (R, ..., RK) for the fluid medium for treatment comprising one or more flow circuits (R2$_1$, R2$_2$, ...) for the fluid medium between the inlet (4) and the outlet (5) of the porous substrate, which flow circuits are interconnected or not interconnected.

**3.** A separator element according to claim 1 or claim 2, **characterized in that** at least one empty space (RF) for recovering filtrate is arranged in the porous substrate (2) and opens out through the perimeter wall (2$_1$) of the porous substrate.

**4.** A separator element according to any one of claims 1 to 3, **characterized in that** each open structure is limited by a single continuous surface between the inlet (4) and the outlet (5) of the porous substrate, being throughout in contact with the fluid medium and without presenting any blind space, the open structure defining three-dimensional structures from the perimeter wall of the porous substrate.

**5.** A separator element according to claim 4, **characterized in that** the three-dimensional structures present identity and continuity of porous material and texture all the way to the perimeter wall.

**6.** A separator element according to any one of claims 1 to 5, **characterized in that** the open structure (3) defines three-dimensional structures with geometrical configurations that are non-repetitive.

**7.** A separator element according to any one of claims 1 to 6, **characterized in that** the open structure (3) defines three-dimensional structures formed by repeating at least one pattern (11) inscribed in a volume unit of the porous substrate forming a mesh (12) inside which a morphologically predefined space is left empty for passing the flow of the fluid for treatment, said repetition taking place firstly by perfect or partial juxtaposition of the pattern(s) (11) in at least one dimension of the space, and secondly in such a manner as to obtain flow continuity for the fluid medium between the empty spaces of the volume unit and porous material continuity for discharging the filtrate.

**8.** A separator element according to claim 7, **characterized in that** the open structure (3) defines three-dimensional structures formed by repeating at least one pattern (11) without varying either the shape or the dimensions of the pattern.

**9.** A separator element according to claim 7, **characterized in that** the open structure (3) defines three-dimensional structures formed by repeating at least one pattern (11) of dimensions that vary gradually in isomorphic manner in at least one direction, and/or of morphology that varies gradually in isometric manner in at least one direction.

**10.** A separator element according to any one of claims 7 to 9, **characterized in that** a pattern (11) and a mesh (12) that is associated therewith may present one or more of the symmetries from the following list:

- central symmetry;
- orthogonal symmetry relative to a straight line;
- mirror symmetry relative to a plane;
- rotational symmetry; and
- symmetry by similarity.

**11.** A separator element according to any one of claims 8 to 10, **characterized in that** the repetition of the pattern(s) (11) presents symmetry relative to the external symmetry of the substrate.

**12.** A separator element according to any one of claims 1 to 11, **characterized in that** the porous substrate (2) is made of a material that is organic or inorganic.

**13.** A separator element according to any one of claims 1 to 12, **characterized in that** it comprises a porous substrate (2) and at least one separator layer (6) continuously deposited on the walls of the three-dimensional structures, each layer being constituted by a ceramic selected from among oxides, nitrides, carbides, and other ceramic materials, and mixtures thereof, and in particular from titanium oxides, alumina, zirconia, and a mixture thereof, titanium nitride, aluminum nitride, boron nitride, silicon carbide, and titanium carbide, optionally mixed with another ceramic material.

**14.** A separator element according to any one of claims 1 to 12, **characterized in that** it comprises a porous substrate (2) and at least one separator layer (6) continuously deposited on the walls of the three-dimensional structures, each layer being constituted by a polymer adapted to the intended separation and deposited from a collodion of the polymer.

**15.** A separator element according to any one of claims 1 to 14, **characterized in that** the porous substrate (2) presents a mean pore diameter lying in the range 1 $\mu$m to 100 pm.

| Familles | | Monocanal | Multicanaux circulaires | | | | Multicanaux non circulaires | |
|---|---|---|---|---|---|---|---|---|
| Forme de l'élément de filtration | | | | | | | | |
| Nombre de canaux | | 1 | 7 | 7 | 19 | 19 | 8 | 23 |
| Diamètre externe | mm | 20 | 20 | 25 | 31/28 | 25 | 25 | 25 |
| Longueur | mm | 1178 | 1178 | 1178 | 1020 | 1178 | 1178 | 1176 |
| Diamètre hydraulique | mm | 14,2 | 4,5 | 6 | 3 | 3,5 | 6 | 3,47 |
| Surface filtrante | m² | 0,053 | 0,116 | 0,155 | 0,350 | 0,246 | 0,195 | 0,330 |
| **Rapport S/V** | m²/m³ | **143** | **313** | **268** | **377** | **425** | **337** | **571** |

**FIG.1**

FIG.2A

FIG.2B

FIG.2C

FIG.2D

FIG.3A

FIG.3B

FIG.3C

FIG.3D

FIG.4A

FIG.4B

FIG.4C

FIG.4D

FIG.5A

FIG.5B

FIG.6A

FIG.6B

FIG.6C

FIG.6D

FIG.7A

FIG.7B

FIG.8A

FIG.8B

FIG.8C

FIG.8D

FIG.9

FIG.9A

EP 3 302 768 B1

FIG.9B

FIG.9C

FIG.9D

FIG.9E

FIG.9F

FIG.9G

FIG.9H

FIG.9I

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0778073 A
- GB 2223690 A
- WO 9628241 A
- FR 3006606